(19) **Europäisches Patentamt**
**European Patent Office**
**Office européen des brevets**

(11) **EP 4 645 709 A1**

(12) **EUROPEAN PATENT APPLICATION**
published in accordance with Art. 153(4) EPC

(43) Date of publication:
**05.11.2025 Bulletin 2025/45**

(21) Application number: **24753491.0**

(22) Date of filing: **19.01.2024**

(51) International Patent Classification (IPC):
*H04B 7/06* (2006.01)        *H04B 7/0408* (2017.01)
*H04W 24/08* (2009.01)        *G06N 20/00* (2019.01)

(52) Cooperative Patent Classification (CPC):
**G06N 20/00; H04B 7/0408; H04B 7/06;
H04W 24/08**

(86) International application number:
**PCT/KR2024/000945**

(87) International publication number:
**WO 2024/167159 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2023 KR 20230016378
03.01.2024 KR 20240000716**

(71) Applicant: **KT Corporation
Seongnam-si, Gyeonggi-do 13606 (KR)**

(72) Inventor: **LEE, Eun Jong
Seongnam-si, Gyeonggi-do 13606 (KR)**

(74) Representative: **BCKIP Part mbB
MK1
Landsbergerstraße 98, 3.Stock
80339 München (DE)**

(54) **METHOD AND APPARATUS FOR BEAM MANAGEMENT BY USING ARTIFICIAL INTELLIGENCE AND/OR MACHINE LEARNING**

(57)     Provided are a method and an apparatus for performing beam management in a wireless communication system. The method of a terminal may include triggering at least one beam failure recovery (BFR) for a cell that performs beam management using an artificial intelligence and/or machine learning model, deactivating the artificial intelligence and/or machine learning model based on the number of the at least one beam failure recovery triggered during a specific time duration, and transmitting deactivation information of the artificial intelligence and/or machine learning model to a base station. The method of the base station may include transmitting, to the terminal, configuration information related to the artificial intelligence and/or machine learning model, receiving, from the terminal, the deactivation information of the artificial intelligence and/or machine learning model, and, based on the received deactivation information, stopping beam generation related to the artificial intelligence and/or machine learning model.

FIG. 15

**Description**

Technical Field

The present disclosure relates to a 3GPP 5G NR system.

Background Art

As more communication devices require greater communication traffic, necessity for a next generation 5G system, which is enhanced compared to a legacy LTE system, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, eMBB corresponds to a next generation mobile communication scenario having characteristics such as high spectrum efficiency, high user experienced data rate, high peak data rate, and the like. URLLC corresponds to a next generation mobile communication scenario having characteristics such as ultra-reliable, ultra-low latency, ultra-high availability, and the like (e.g., V2X, Emergency Service, Remote Control). mMTC corresponds to a next generation mobile communication scenario having characteristics such as low cost, low energy, short packet, and massive connectivity (e.g., IoT).

Disclosure of Invention

Technical Problem

The disclosure provides a method and apparatus for efficiently managing an AI/ML model in a beam management procedure of a wireless communication system, in response to the occurrence of beam failure recovery (BFR).

Solution to Problem

In accordance with an embodiment, a method of a terminal in a wireless communication system may be provided. The method of the terminal may include triggering at least one beam failure recovery (BFR) for a cell performing beam management using an artificial intelligence and/or machine learning model, performing deactivation of the artificial intelligence and/or machine learning model based on a number of the at least one beam failure recovery triggered during a specific time duration, and transmitting deactivation information of the artificial intelligence and/or machine learning model to a base station.

In accordance with another embodiment, a method of a base station in a wireless communication system may be provided. The method of the base station may include transmitting configuration information related to an artificial intelligence and/or machine learning model to a terminal, receiving deactivation information of the artificial intelligence and/or machine learning model from the terminal, and stopping beam generation related to the artificial intelligence and/or machine learning model based on the received deactivation information.

In accordance with further another embodiment, a communication apparatus in a wireless communication system may be provided. The communication apparatus may include least one processor; and at least one memory configured to store instructions and operably electrically connectable to the at least one processor, wherein operations performed based on the instructions executed by the at least one processor include: triggering at least one beam failure recovery (BFR) for a cell that performs beam management using an artificial intelligence and/or machine learning model, performing deactivation of the artificial intelligence and/or machine learning model based on a number of the at least one BFR triggered during a specific time duration, and transmitting deactivation information of the artificial intelligence and/or machine learning model to a base station.

In accordance with still another embodiment, a communication apparatus in a wireless communication system may be provided. The communication apparatus may include at least one processor; and at least one memory configured to store instructions and operably electrically connectable to the at least one processor, wherein operations performed based on the instructions executed by the at least one processor include: transmitting configuration information related to an artificial intelligence and/or machine learning model to a terminal, receiving deactivation information of the artificial intelligence and/or machine learning model from the terminal, and stopping beam generation related to the artificial intelligence and/or machine learning model based on the received deactivation information.

The terminal may start a timer associated with the deactivation of the artificial intelligence and/or machine learning model and count the number of the at least one beam failure recovery triggered while the timer is running.

Further, the terminal may stop the timer when the counted number of the at least one beam failure recovery reaches a maximum count and reset the counted number of the at least one beam failure recovery when the timer expires.

Meanwhile, the terminal may receive configuration information related to the artificial intelligence and/or machine learning model. The configuration information related to the artificial intelligence and/or machine learning model may include at least one of i) timer value information and ii) maximum count information for beam failure recovery.

In addition, the deactivation information transmitted by the terminal to the base station may include at least one of i) identity information of the artificial intelligence and/or machine learning model, ii) information indicating that the artificial intelligence and/or machine learning model has been deactivated and iii) an indicator indicating deactivation of an artificial intelligence and/or machine learning model of the base station.

The base station may fall back to beam management that does not apply the artificial intelligence and/or machine learning model based on the received deactivation information from the terminal.

Advantageous Effects of Invention

According to the disclosure of the present specification, it is possible to prevent degradation of system performance due to reduced performance of an AI/ML-based beam management technique. Specifically, by deactivating the model based on repeated triggering of beam failure recovery (BFR) at the terminal, persistent beam failure caused by the use of an unreliable AI/ML model may be avoided, thereby minimizing overall system performance degradation.

Brief Description of Drawings

FIG. 1 illustrates a wireless communication system.
FIG. 2 illustrates a structure of a radio frame used in NR.
FIGS. 3A to 3C illustrate exemplary architectures for a wireless communication service.
FIG. 4 illustrates a slot structure of a new radio (NR) frame.
FIG. 5 shows an example of a subframe type in NR.
FIG. 6 illustrates a structure of a self-contained slot.
FIG. 7 is a diagram illustrating a beam failure detection (BFD) operation in NR.
FIGS. 8A to 8B are diagrams illustrating beam measurement and spatial domain beam prediction using AI/ML.
FIG. 9 is a diagram illustrating temporal domain beam prediction using AI/ML.
FIG. 10 is a flowchart showing a method of operating a terminal according to an embodiment of the disclosure.
FIGS. 11A to 11B are diagrams illustrating model deactivation performed based on a model according to an embodiment of the disclosure.
FIGS. 12A to 12C are diagrams illustrating model deactivation performed based on a serving cell according to an embodiment of the disclosure.
FIG. 13 is a diagram illustrating model deactivation performed based on a terminal according to an embodiment of the disclosure.
FIG. 14 is a flowchart showing ing operations of a base station and a terminal according to an embodiment of the disclosure.
FIG. 15 is a flowchart showing a method of operating a terminal according to an embodiment of the disclosure.
FIG. 16 is a flowchart showing a method of operating a base station according to an embodiment of the disclosure.
FIG. 17 is a block diagram illustrating apparatuses according to an embodiment of the disclosure.
FIG. 18 is a block diagram showing a configuration of a terminal according to an embodiment of the disclosure.
FIG. 19 is a configuration block diagram of a processor in which the disclosure is implemented.
FIG. 20 is a detailed block diagram of a transceiver of a first apparatus shown in FIG. 17 or a transceiving unit of an apparatus shown in FIG. 18.

Mode for the Invention

The technical terms used herein are intended to merely describe specific embodiments and should not be construed as limiting the disclosure. Further, the technical terms used herein should be, unless defined otherwise, interpreted as having meanings generally understood by those skilled in the art but not too broadly or too narrowly. Additionally, the technical terms used herein, which are determined not to exactly represent the spirit of the disclosure, should be replaced by or understood by such technical terms as being able to be exactly understood by those skilled in the art. Finally, the general terms used herein should be interpreted in the context as defined in the dictionary, but not in an excessively narrowed manner.

The expression of the singular form in the disclosure includes the meaning of the plural form unless the meaning of the singular form is definitely different from that of the plural form in the context. In the following description, the term 'include' or 'have' may represent the existence of a feature, a number, a step, an operation, a component, a part or the combination thereof described in the disclosure and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts that are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to include its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features described individually in one drawing in this specification may be implemented separately or at the same time.

In the accompanying drawings, user equipment (UE) is illustrated by way of example, but the illustrated UE may be also referred to as a terminal, mobile equipment (ME), or the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (e.g., a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), a repeater(relay), and so on.

Although embodiments of the disclosure will be described based on an LTE system, an LTE-advanced (LTE-A) system, and an NR system, such embodiments may be applied to any communication system corresponding to the aforementioned definition.

**<Wireless Communication System>**

With the success of long term evolution (LTE)/LTE-A (LTE-Advanced) for the 4th generation mobile communication, the next generation, i.e., 5$^{th}$ generation (so called 5G) mobile communication has been commercialized and the follow-up studies are also ongoing.

The 5$^{th}$ generation mobile communications defined by the International Telecommunication Union (ITU) refers to communication providing a data transmission rate of up to 20 Gbps and a minimum actual transmission rate of at least 100 Mbps anywhere. The official name of the 5th generation mobile telecommunications is 'IMT-2020.'

The ITU proposes three usage scenarios, namely, enhanced Mobile Broadband (eMBB), massive Machine Type Communication (mMTC) and Ultra Reliable and Low Latency Communications (URLLC).

The URLLC relates to a usage scenario that requires high reliability and low latency. For example, services such as autonomous driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and reduce battery consumption compared to a 4G mobile communication system to better implement the Internet of things. A new radio access technology (new RAT or NR) may be proposed for such 5G mobile communication.

An NR frequency band is defined as two types of frequency ranges: FR1 and FR2. The numerical value in each frequency range may vary, and the frequency ranges of the two types FR1 and FR2 may for example be shown in Table 1 below. For convenience of description, FR1 among the frequency ranges used in the NR system may refer to a Sub-6 GHz range, and FR2 may refer to an above-6 GHz range, which may be called millimeter waves (mmWs).

[Table 1]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may vary in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, such as, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs that do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An reference signal (RS), also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

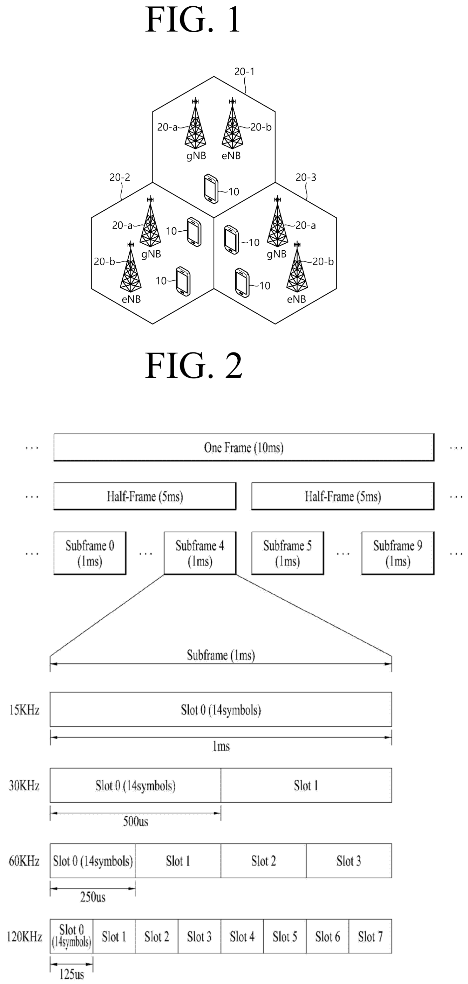

**FIG. 1 illustrates a wireless communication** system.

Referring to FIG. 1, the wireless communication system includes at least one base station (BS). The BS includes a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be performed simultaneously. In a TDD system in which uplink transmission and downlink transmission are divided in subframe units, uplink transmission and downlink transmission are performed in different subframes.

**FIG. 2 illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

**<Support of Various Numerologies>**

With the development of wireless communication technology, multiple numerologies may be available to UEs in the NR system. For example, in the case where a subcarrier spacing (SCS) is 15 kHz, a wide area of the typical cellular bands is supported. In the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a subcarrier spacing (SCS). A single cell can provide a plurality of numerologies to UEs. When an index of a numerology is represented by $\mu$, a subcarrier spacing and a corresponding CP length may be expressed as shown in the following table.

[Table 2]

| $\mu$ | $\Delta f = 2^{\mu} \cdot 15$ [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by $\mu$, the number of OLDM symbols per slot $N^{slot}_{symb}$, the number of slots per frame $N^{frame,\mu}_{slot}$, and the number of slots per subframe $N^{subframe,\mu}_{slot}$ are expressed as shown in the following table.

[Table 3]

| μ | $\Delta f=2^{\mu}\cdot 15$ [kHz] | $N^{slot}_{symb}$ | $N^{frame,\mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by μ, the number of OLDM symbols per slot $N^{slot}_{symb}$, the number of slots per frame $N^{frame,\mu}_{slot}$, and the number of slots per subframe $N^{subframe,\mu}_{slot}$ are expressed as shown in the following table.

[Table 4]

| μ | SCS (15*2^u) | $N^{slot}_{symb}$ | $N^{frame,\mu}_{slot}$ | $N^{subframe,\mu}_{slot}$ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

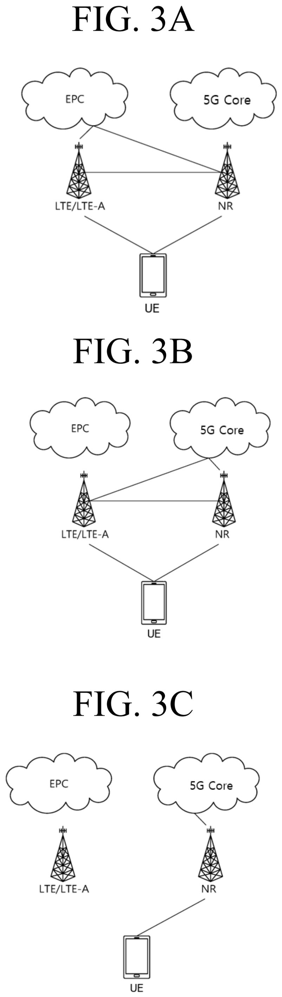

FIGS. 3A to 3C illustrate exemplary architectures for a wireless communication service.

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to both paired and not-paired spectrums. A pair of spectrums indicates including two subcarriers for downlink and uplink operations. For example, one subcarrier in one pair of spectrums may include a pair of a downlink band and an uplink band.

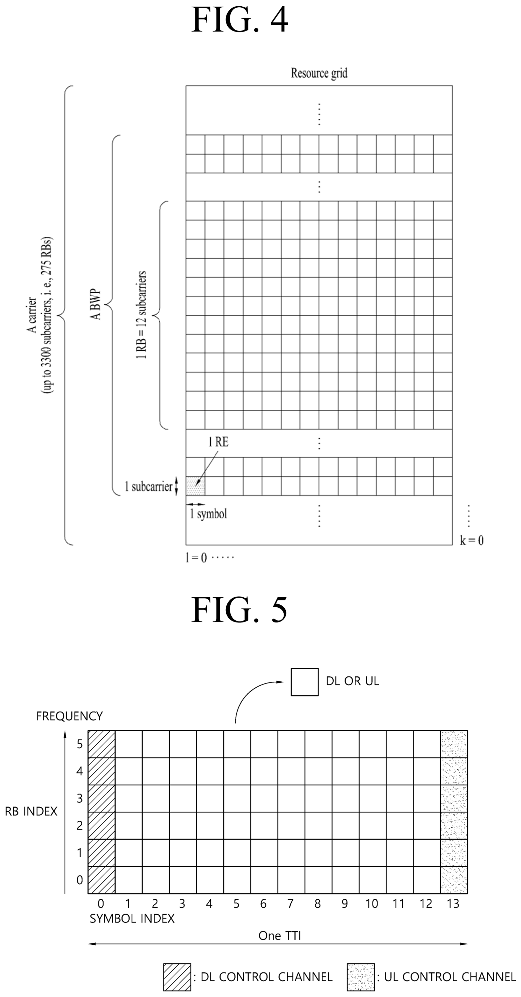

**FIG. 4 illustrates a slot structure of an NR frame.**

A slot includes a plurality of symbols in the time domain. For example, in the case of the normal CP, one slot includes seven symbols. On the other hand, in the case of an extended CP, one slot includes six symbols. A carrier includes a plurality of subcarriers in the frequency domain. A resource block (RB) is defined as consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in both the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

**FIG. 5 shows an example of a subframe type in NR.**

Referring to FIG. 5, a TTI (Transmission Time Interval) may be called a subframe or a slot for NR (or new RAT). The subframe (or slot) shown in FIG. 5 can be used in a TDD system of NR (or new RAT) to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as the DL control region) in a slot may be used to transmit a DL control channel, and the last M symbols (hereinafter referred to as the UL control region) in the slot may be used to transmit a UL control channel. N and M are integers greater than 0. A resource region between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception may be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

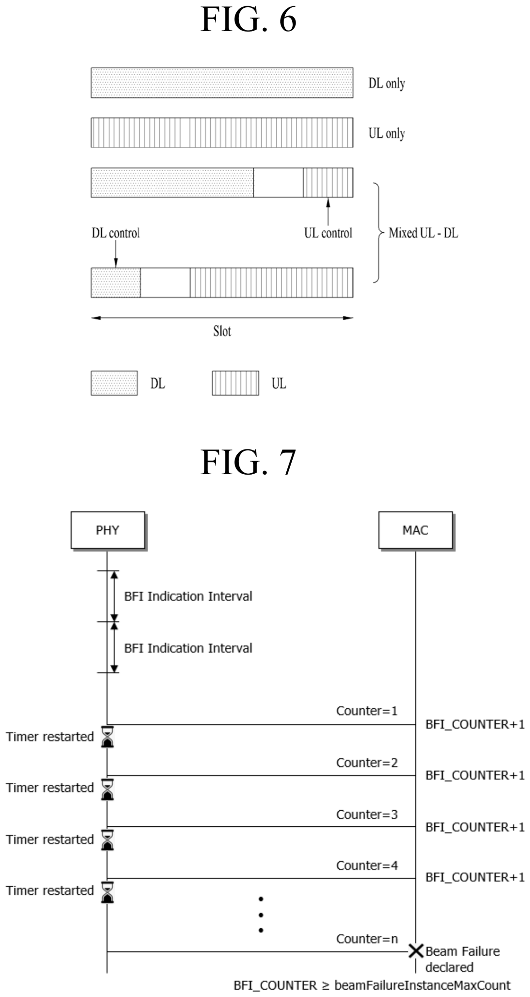

**FIG. 6 illustrates a structure of a self-contained slot.**

In the NR system, the frame has a self-contained structure, in which all of a DL control channel, DL or UL data channel, UL control channel, and other elements are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource region between the DL control region and the UL control region (hereinafter referred to as a data region) may be used for DL data transmission or UL data transmission. For example, the following configurations may be taken into account. The durations are listed in temporal order.

1. DL only configuration
2. UL only configuration
3. Mixed UL-DL configuration

-

## DL region + Guard Period (GP) + UL control region

-

## DL control region + GP + UL region

DL region: (i) DL data region, (ii) DL control region + DL data region
UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/-Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

<Detailed description of Embodiments >

The disclosure relates to a terminal that performs beam management using artificial intelligence (AI) and/or machine learning (ML). More particularly, the disclosure proposes the terminal that is configured to deactivate the model in relation to the occurrence of beam failure recovery (BFR) in a cell where beam management is performed using an AI/ML model. More specifically, the present disclosure defines a relationship between BFR and model deactivation for a specific cell and introduces a model deactivation event triggered by the occurrence of BFR.

Hereinafter, beam failure detection (BFD) and beam failure recovery (BFR) in the 3GPP NR system are described.

**FIG. 7 is a diagram illustrating a beam failure detection (BFD) operation in NR.**

BFD is a Layer 1 (L1)/Layer 2 (L2) procedure in which the physical (PHY) layer provides beam failure instance (BFI) indications to the medium access control (MAC) layer. Referring to FIG. 7, BFI indications from the PHY layer may be provided to the MAC layer based on a BFI indication interval. The MAC layer counts the BFI indications received from the PHY layer, and when the counted BFI indications reach a configured maximum number, beam failure is declared.

The PHY layer triggers a beam failure instance (BFI) each time it detects that the reference signal received power (RSRP) of the reference signal of the serving beam is below a threshold, and provides the BFI to the MAC layer.

Upon receiving a BFI, the MAC layer starts a timer and increments a counter by one for each BFI. When the BFI counter becomes greater than or equal to the maximum number of BFIs (i.e., BFI_COUNTER $\geq$ beamFailureInstance-MaxCount), the MAC layer triggers a beam failure and initiates a beam failure recovery (BFR) procedure.

There may be scenarios where the PHY layer stops providing BFIs to the MAC layer or the signal quality improves such that the PHY layer no longer detects any issues. To handle such cases, the MAC layer increments the BFI counter (BFI_COUNTER) by one and restarts the running timer each time a BFI is reported by the PHY layer. If no BFI is received from the PHY layer and the (re)started timer expires, the MAC layer resets the BFI counter (BFI_COUNTER) and may assume that no further BFIs will occur.

Beam failure recovery (BFR) is a procedure used to indicate a new beam (SSB and/or CSI-RS) when a beam failure is detected for the serving beam(s), i.e., synchronization signal block (SSB)(s) and/or channel state information-reference signal (CSI-RS)(s). In the current 3GPP NR specifications, BFR is performed at the serving cell level, covering both beam failure detection and recovery.

Hereinafter, the operations of beam failure detection (BFD) and beam failure recovery (BFR) as defined in the current NR specifications are described.

1. The terminal receives BFD/BFR-related parameters for each serving cell through RRC signaling.

2. When the MAC layer of the terminal receives a BFI indication from a lower layer, it starts the BFD timer for the corresponding serving cell.

3. If the number of received BFIs exceeds the maximum number of BFIs (beamFailureInstanceMaxCount) while the BFD timer is running, beam failure recovery (BFR) for the corresponding serving cell is triggered.

4. If the serving cell for which BFR is triggered is a secondary cell (SCell), the terminal generates and transmits a BFR MAC CE (control element) or triggers an SCell BFR scheduling request (SR).

4-A. The BFR MAC CE includes candidate beam information for each cell (e.g., SSB/CSI-RS IDs) to inform the base station of the new beam.

4-B. If there is no uplink resource available for transmitting the BFR MAC CE, the terminal transmits a BFR SR to obtain resources for the BFR MAC CE transmission, and then transmits the BFR MAC CE.

4-C. When it is determined that the BFR MAC CE has been successfully transmitted, the BFR procedure is considered to be successfully completed.

If the BFR MAC CE transmission fails, a random access channel (RACH) procedure, either contention-free random access (CFRA) or contention-based random access (CBRA), is initiated on the SpCell (special cell).

5-A. If the RACH triggered for BFR is successfully completed, the BFR procedure is also considered to be successfully completed.

Hereinafter, technical features related to the BFD and BFR procedures are described. Section 5.17 of 3GPP TS 38.321 v17.3.0 may be referenced for this description.

When a beam failure is detected on the serving SSB(s) and/or CSI-RS(s), a beam failure recovery procedure is used to indicate a new SSB or CSI-RS to the serving gNB. The MAC entity may be configured by RRC per serving cell or per beam failure detection reference signal (BFD-RS). Beam failure is detected by counting BFI indications from lower layers to the MAC entity.

The RRC configures the following parameters:

beamFailureInstanceMaxCount: for beam failure detection;
beamFailureDetectionTimer: for beam failure detection;
beamFailureRecoveryTimer for the beam failure recovery procedure;
rsrp-ThresholdSSB: RSRP threshold for SpCell beam failure recovery;
rsrp-ThresholdBFR: RSRP threshold for SCell beam failure recovery;
powerRampingStep: for SpCell beam failure recovery;
powerRampingStepHighPriority: for SpCell beam failure recovery;
preambleReceivedTargetPower: for SpCell beam failure recovery;
preambleTransMax: for SpCell beam failure recovery;

scalingFactorBI: for SpCell beam failure recovery;

ssb-perRACH-Occasion: for SpCell beam failure recovery using contention-free random access resources;

ra-ResponseWindow: time window for monitoring responses to SpCell beam failure recovery using contention-free random access resources;

prach-ConfigurationIndex: for SpCell beam failure recovery using contention-free random access resources;

ra-ssb-OccasionMaskIndex: for SpCell beam failure recovery using contention-free random access resources;

ra-OccasionList: for SpCell beam failure recovery using contention-free random access resources;

candidateBeamRSList: list of candidate beams for SpCell beam failure recovery;

candidateBeamRSSCellList: list of candidate beams for SCell beam failure recovery.

The UE variable used in the BFD procedure is as follows:

BFI_COUNTER (per serving cell or per BFD-RS set consisting of two BFD-RS sets within a serving cell): a counter for BFI indications, initially set to 0.

The MAC entity shall perform the following for each serving cell configured for beam failure detection:

> if beam failure instance indication for a BFD-RS set has been received from lower layers:

>> start or restart the beamFailureDetectionTimer of the BFD-RS set;
>> increment BFI_COUNTER of the BFD-RS set by 1;
>> if BFI_COUNTER of the BFD-RS set >= beamFailureInstanceMaxCount:
>> trigger a BFR for this BFD-RS set of the Serving Cell;

> if the Serving Cell is SpCell and the Random Access procedure initiated for BFR of both BFD-RS sets of SpCell is successfully completed:

>> set BFI_COUNTER of each BFD-RS set of SpCell to 0.
>> consider the Beam Failure Recovery procedure successfully completed.

> if beam failure instance indication has been received from lower layers:

>> start or restart the beamFailureDetectionTimer;
>> increment BFI_COUNTER by 1;
>> if BFI_COUNTER >= beamFailureInstanceMaxCount:

>>> if the Serving Cell is SCell:

>>>> trigger a BFR for this Serving Cell;

>>> else:

>>>> initiate a Random Access procedure on the SpCell.

Currently, 3GPP has initiated studies in Release 18 to apply AI/ML to beam management in order to enhance the performance of beam management and reduce the burden of beam measurements.

A list of terms related to AI/ML being discussed is shown in the table below.

[Table 5]

| Terminology | Description |
| --- | --- |
| Data collection | A process of collecting data by the network nodes, management entity, or UE for the purpose of AI/ML model training, data analytics and inference |
| AI/ML Model | A data driven algorithm that applies AI/ML techniques to generate a set of outputs based on a set of inputs. |
| AI/ML model training | A process to train an AI/ML Model [by learning the input/output relationship] in a data driven manner and obtain the trained AI/ML Model for inference |

(continued)

| Terminology | Description |
|---|---|
| AI/ML model Inference | A process of using a trained AI/ML model to produce a set of outputs based on a set of inputs |
| AI/ML model validation | A subprocess of training, to evaluate the quality of an AI/ML model using a dataset different from one used for model training, that helps selecting model parameters that generalize beyond the dataset used for model training. |
| AI/ML model testing | A subprocess of training, to evaluate the performance of a final AI/ML model using a dataset different from one used for model training and validation. Differently from AI/ML model validation, testing does not assume subsequent tuning of the model. |
| UE-side (AI/ML) model | An AI/ML Model whose inference is performed entirely at the UE |
| Network-side (AI/ML) model | An AI/ML Model whose inference is performed entirely at the network |
| One-sided (AI/ML) model | A UE-side (AI/ML) model or a Network-side (AI/ML) model |
| Two-sided (AI/ML) model | A paired AI/ML Model(s) over which joint inference is performed, where joint inference comprises AI/ML Inference whose inference is performed jointly across the UE and the network, i.e, the first part of inference is firstly performed by UE and then the remaining part is performed by gNB, or vice versa. |
| AI/ML model transfer | Delivery of an AI/ML model over the air interface, either parameters of a model structure known at the receiving end or a new model with parameters. Delivery may contain a full model or a partial model. |
| (Model download | Model transfer from the network to UE |
| Model upload | Model transfer from UE to the network |
| Federated learning / federated training | A machine learning technique that trains an AI/ML model across multiple decentralized edge nodes (e.g., UEs, gNBs) each performing local model training using local data samples. The technique requires multiple interactions of the model, but no exchange of local data samples. |
| Offline field data | The data collected from field and used for offline training of the AI/ML model |
| Online field data | The data collected from field and used for online training of the AI/ML model |
| Model monitoring | A procedure that monitors the inference performance of the AI/ML model |
| Supervised learning | A process of training a model from input and its corresponding *labels*. |
| Unsupervised learning | A process of training a model without labelled data. |
| Semi-supervised learning | A process of training a model with a mix of labelled data and unlabelled data |
| Reinforcement Learning (RL) | A process of training an AI/ML model from input (a.k.a. state) and a feedback signal (a.k.a. reward) resulting from the model's output (a.k.a. action) in an environment the model is interacting with. |
| Model activation | enable an AI/ML model for a specific function |
| Model deactivation | disable an AI/ML model for a specific function |
| Model switching | Deactivating a currently active AI/ML model and activating a different AI/ML model for a specific function |

3GPP has decided to study the specification impacts of applying AI/ML models to beam management (BM) procedures, specifically for BM Case 1 (spatial beam prediction) and BM Case 2 (temporal beam prediction).

Furthermore, based on model performance evaluation, a model management procedure is to be introduced. Model management refers to procedures that handle operations such as model updates, model switching, model activation/deactivation, and fallback according to the model's performance. Detailed discussions on this topic are expected. Model management can be performed through model monitoring, and different procedural methods are anticipated to be defined depending on whether the model is UE-side or NW-side.

In typical NR beam management operations, as the number of beams and terminals increases, system overhead and terminal power consumption also increase. Furthermore, for terminals in the initial cell access phase, measuring all beams before selecting an initial beam can cause delays in cell access. To address these issues, the use of AI/ML models that predict the strength of all beams based on measurements of only some beams has been proposed; however, detailed procedures or methods for this are not yet defined. In this disclosure, a model management approach in response to BFR occurrences is proposed when applying AI/ML models to the beam management procedure.

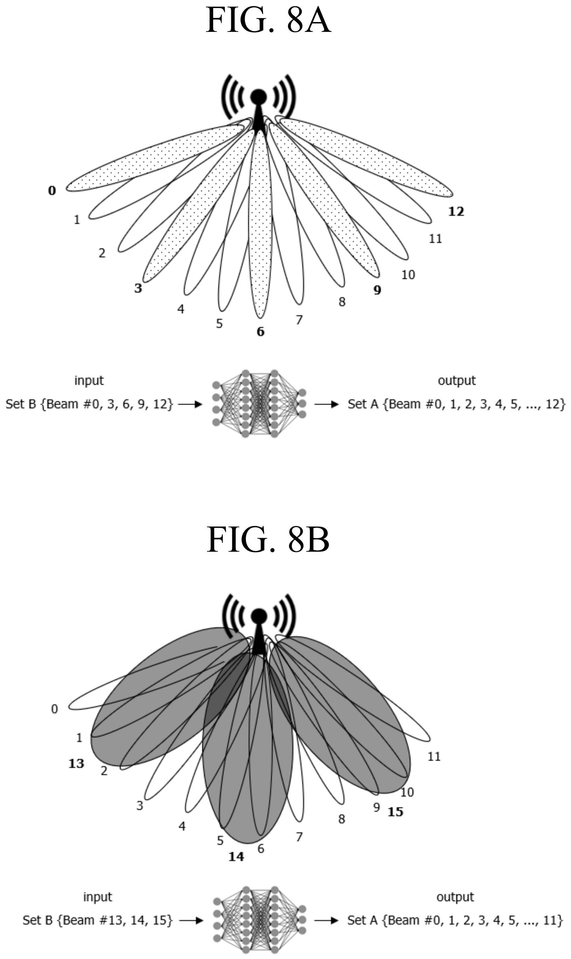

FIGS. 8A to 8B are diagrams illustrating beam measurement and spatial domain beam prediction using AI/ML.

3GPP RAN Working Group 1 (WG1) has initiated studies on "AI/ML for beam management," and has agreed to discuss spatial DL beam prediction (BM-Case 1) and temporal DL beam prediction (BM-Case 2) as sub use cases. This involves predicting the beam strength of set A based on measurements of beams belonging to set B. FIGS. 8A and 8B illustrate cases of spatial DL beam prediction. FIG. 8A shows the case where set B is a subset of set A, while FIG. 8B considers the case where set B consists of wide beams and set A consists of narrow beams, i.e., sets composed of different beams. For temporal DL beam prediction, in addition to i) the case where set B is a subset of set A, and ii) the case where set A and set B are different sets, a third case iii) where set A and set B are composed of the same set is also considered. Temporal DL beam prediction predicts future beam information based on past beam measurement data. After predicting the entire beam set based on spatial DL beam prediction, it may be applied to case iii), where set A and set B are identical sets. For these reasons, cases i) where set B is a subset of set A and ii) where set A and set B are different sets are expected to be used as the fundamental beam prediction methods in spatial DL beam prediction.

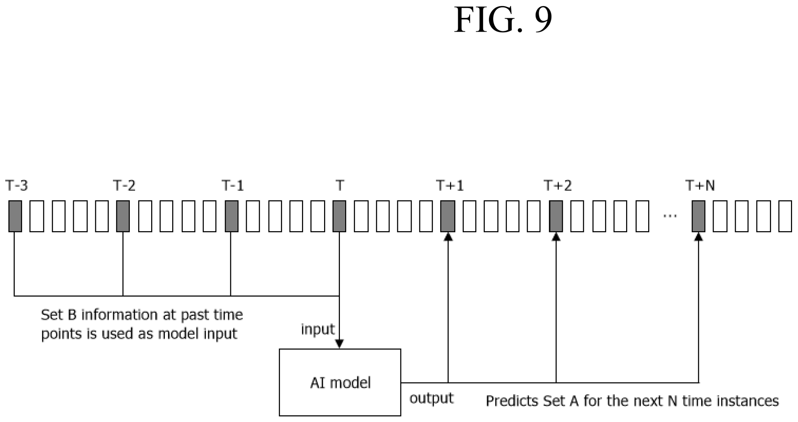

**FIG. 9 is diagram illustrating temporal domain beam prediction using AI/ML.**

Temporal beam prediction of BM-Case 2, as shown in FIG. 9, is defined as an operation that predicts beam results at a specific near-future time point (i.e., output) based on past beam measurement information (i.e., input). The sets of beams used as input and output may include, as previously described, i) the case where set B is a subset of set A, ii) the case where set A and set B are different sets, and additionally, iii) the case where set A and set B are composed of the same set.

AI/ML-based beam prediction may involve different procedures depending on the location of the AI/ML model and the entity performing training and inference. The following alternatives are considered:

- Alternative 1: AI/ML model training and inference performed on the network side
- Alternative 2: AI/ML model training and inference performed on the UE side
- Alternative 3: AI/ML model training performed on the network side, inference performed on the UE side
- Alternative 4: AI/ML model training performed on the UE side, inference performed on the network side

Among the alternatives above, in Alternatives 1 and 2, both training and inference operate within a single node, so model transfer over the air interface is not required; however, signaling of information necessary to operate the AI/ML model may still be needed. This corresponds to the currently defined collaboration level y (signaling only without model transfer). In Alternatives 3 and 4, training and inference operate on different nodes, thus model transfer over the air interface is required, corresponding to the defined collaboration level z. 3GPP has decided to support Alternatives 1 and 2, but has postponed the decision on supporting Alternative 3 until the support for model transfer to UE-side AI/ML models is determined. Furthermore, Alternative 4 will not be supported in Release 18 beam management.

Moreover, the AI/ML-based beam management methods under consideration aim to reduce the burden of measuring all beams (Set A) and the overhead of reference signals (RS) by predicting the signal strength of the entire beam set based on measurements of only a subset of beams or different beams. However, if the predicted beams in Set A are inaccurate, the AI/ML-based method may select incorrect beams, causing frequent beam failures or persistent connection drops. To address this, a process of continuously monitoring the accuracy of the predicted beams is necessary. Currently, 3GPP has also decided to conduct studies on such monitoring. Depending on the node that calculates model performance and the node that decides on model management, the following three model monitoring methods can be considered.

- Alternative 1: UE-side model monitoring

    > The UE monitors performance metric(s).
    > The UE decides on model selection/activation/deactivation/switching/fallback operations.

Alternative 2: NW-side model monitoring

> The network monitors performance metric(s)
> The network decides on model selection/activation/deactivation/switching/fallback operations.

Alternative 3: Hybrid model monitoring

> The UE monitors performance metric(s)
> The network decides on model selection/activation/deactivation/switching/fallback operations.

Among the three model monitoring alternatives described above, all alternatives, UE-side model monitoring, NW-side model monitoring, and hybrid model monitoring, may be considered for UE-side AI/ML models. In contrast, for NW-side AI/ML models, only Alternative 2, i.e., NW-side model monitoring, has been decided to be considered.

Here, based on the results of performance evaluation for monitoring, one of the following operations, selection, activation, deactivation, switching, or fallback, may be performed by either the UE or the network. In terms of performance evaluation metrics under discussion, system performance, in addition to model accuracy, is also being considered. In the case of beam management, frequent occurrences of BFR (beam failure recovery) may lead to degradation of system performance, however, discussions on this aspect have not yet been initiated.

The AI/ML-based beam management approach considers model updates and switching through model monitoring as a means to prevent frequent beam connection failures caused by inaccurate beam inference. Nonetheless, there remains the possibility that the model may face environments where performance improvement is difficult due to sudden changes in the surrounding environment. From this perspective, this specification proposes that BFR (beam failure recovery) occurrence be considered as one of the performance evaluation metrics for AI/ML models used in beam management. It further proposes that, upon the occurrence of BFR, model deactivation or fallback operations be performed as a way to manage the model.

In addition, this disclosure proposes that when beam management procedures are performed between the base station (gNB/NW) and the UE, the AI/ML model used for beam management in a given cell should be deactivated (or a fallback should be initiated) based on the occurrence of BFR (Beam Failure Recovery) for that cell. Specifically, it is proposed to define an event for model deactivation based on the number of BFR occurrences. As a concrete approach, this specification introduces the definition of an arbitrary time window (Model Deactivation Timer: Model_deact_Timer) and new parameters for counting the number of BFRs within that time period (BFR_num and Max_Num of BFR). The UE behavior based on these parameters is also specified.

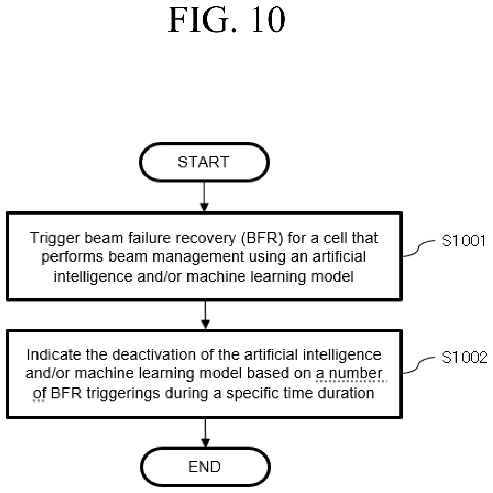

**FIG. 10 is a flowchart showing a method of operating a terminal according to an embodiment of the disclosure.**

Referring to FIG. 10, the terminal triggers beam failure recovery (BFR) for a cell that performs beam management using an artificial intelligence and/or machine learning (AI/ML) model (S1001). Then, based on the number of triggered BFRs during a specific time duration, the terminal determines deactivation of the AI/ML model (S1002).

That is, when a BFR is triggered for a cell corresponding to any AI/ML model activated in the terminal, the AI/ML model is instructed to be deactivated if the number of BFRs occurring during a defined time duration satisfies a predefined event.

For terminal-side models (UE-side models) in this specification, it is preferable to apply either terminal-side model monitoring (UE-side model monitoring) or hybrid model monitoring. Alternatively, even in the case of network-side models (NW-side models), the base station may configure the timer and parameters related to BFR for the terminal to enable model deactivation. This allows the base station to decide on model deactivation by receiving BFR-related information from the terminal. Alternatively, model deactivation may be defined to be performed by configuring the timer or parameters internally within the base station implementation.

More specifically, the model deactivation event based on the timer and BFR count parameters proposed in this specification may be defined to operate for any i) model activated for the terminal, ii) serving cell, or iii) the terminal itself. Accordingly, the method for setting the values of the timer and parameters may be configured by the network on a per-terminal, per-model, or per-serving cell basis, either in relation to or independently of the aforementioned cases.

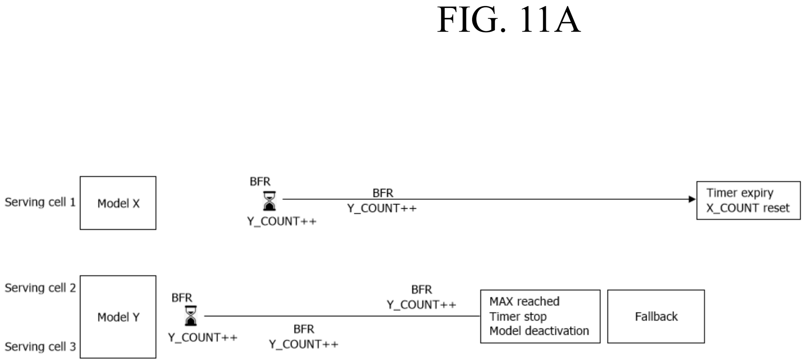

**FIGS. 11A to 11B are diagrams illustrating model deactivation performed based on a model according to an embodiment of the disclosure.**

If one or more serving cells are configured for a given terminal, and any AI/ML model for beam management may be configured to be applied to one or more serving cells, the number of BFR occurrences in the cell(s) where the model is applied may be counted using a single timer and BFR count parameter.

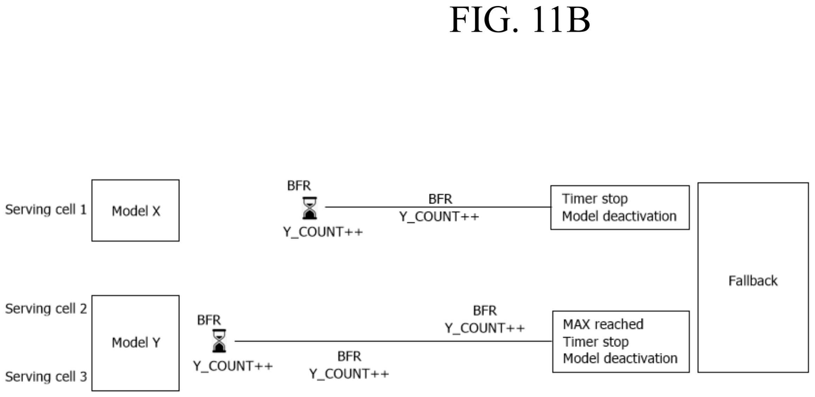

FIG. 11A illustrates the case where both the event and deactivation are performed based on the model, while FIG. 11B illustrates the case where the event is model-based and the model deactivation is performed at the terminal level.

Referring to FIG. 11A, when three serving cells are configured for a terminal, and beam management is performed using AI/ML model X for serving cell 1, and using AI/ML model Y for the other serving cells 2 and 3, the timer (X_timer) and BFR count parameter (X_COUNT) triggered by BFRs occurring in serving cell 1 using model X, and the timer (Y_timer) and BFR count parameter (Y_COUNT) triggered by BFRs occurring in serving cells 2 and 3 using model Y, can be managed and operated based on models X and Y, respectively. The timer for model Y starts when a BFR occurs in either serving cell 2 or serving cell 3, and during the operation of this timer, additional BFRs occurring in serving cells 2 or 3 are counted. When the BFR count reaches the maximum value for a model, model deactivation is instructed. That is, if model Y used in serving cell 2 or serving cell 3 is deactivated, beam management for serving cells 2 or 3 may fall back to a legacy method (e.g., non-AI based method).

In FIG. 11B, the timer and BFR count parameters operate for each model in the same way as in FIG. 11A, but if the BFR count reaches the maximum value while the timer for a specific model is running, all beam management related AI/ML models activated for the terminal are deactivated. This implies that the reliability of model Y is considered equivalent to the reliability of all beam management models, meaning the terminal should stop performing beam management procedures using AI/ML models and fall back to the typical beam management method.

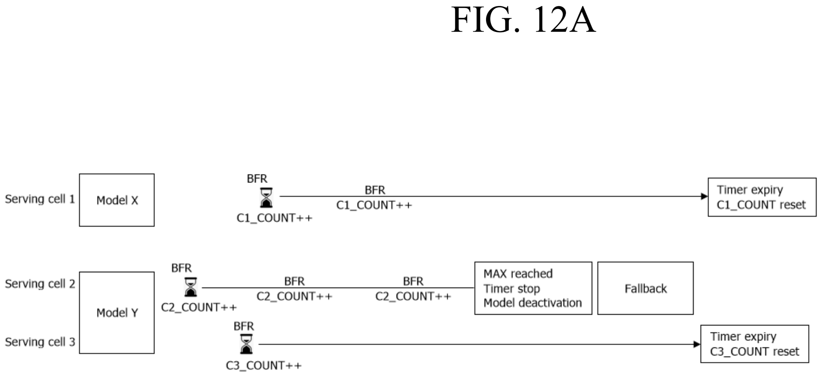

**FIGS. 12A to 12C are diagrams illustrating model deactivation performed based on a serving cell according to an embodiment of the disclosure.**

For a terminal with one or more serving cells configured, where AI/ML models X and Y are applied to serving cell 1 and serving cells 2 and 3 respectively, even if the same model Y operates for both serving cell 2 and serving cell 3, the model deactivation timers (C1_timer, C2_timer, C3_timer) and BFR count parameters (C1_COUNT, C2_COUNT, C3_COUNT) may be defined and operate separately for each serving cell.

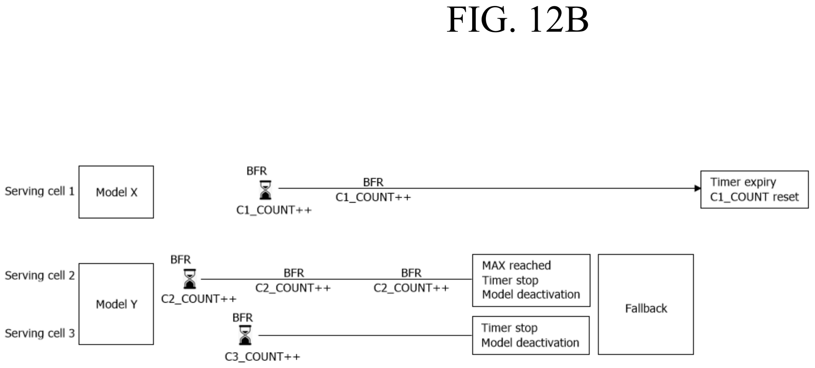

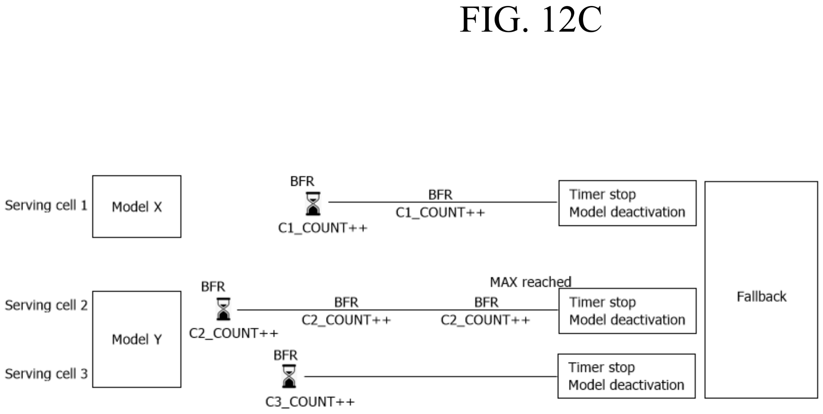

FIG. 12A illustrates the case where both the event and model deactivation are performed based on the serving cell, FIG. 12B illustrates the case where the event is based on the serving cell and the model deactivation is based on the model, and FIG. 12C illustrates the case where the event is based on the serving cell and the model deactivation is performed at the terminal level.

Referring to FIG. 12A, the timer starts individually for each serving cell where a BFR is triggered, and only additional BFRs occurring in that serving cell during the timer's operation are counted as valid occurrences. If the number of BFRs in that serving cell reaches the maximum value, beam management for that cell may be instructed not to apply the AI/ML model (i.e., deactivation or fallback). In other words, even if a single model Y is applied for beam management in both serving cell 2 and serving cell 3, if frequent BFRs occur only in serving cell 2, beam management using model Y may be deactivated only for serving cell 2, while beam management using model Y may continue to be applied for serving cell 3.

As shown in FIG. 12B, the event operates on a serving cell basis, but the deactivation may be applied to a specific model. That is, as in the example of FIG. 12A, timers (C1_timer, C2_timer, C3_timer) and BFR count parameters (C1_COUNT, C2_COUNT, C3_COUNT) are applied and operate individually for each cell. However, if the BFR count for serving cell 2 reaches the maximum value while the timer for serving cell 2 is running, the AI/ML model may be deactivated for all cells using model Y. In other words, beam management using AI/ML may be deactivated for both serving cell 2 and serving cell 3 where model Y is applied, and beam management for serving cells 2 and 3 may fallback to the legacy beam management procedure (e.g., typical beam management procedure).

On the other hand, as shown in FIG. 12C, timers (C1_timer, C2_timer, C3_timer) and BFR count parameters (C1_COUNT, C2_COUNT, C3_COUNT) operate for each serving cell, but if the BFR count for any specific cell reaches the maximum value while its timer is running, it may be defined to deactivate all beam management-related AI/ML models that are activated for the terminal.

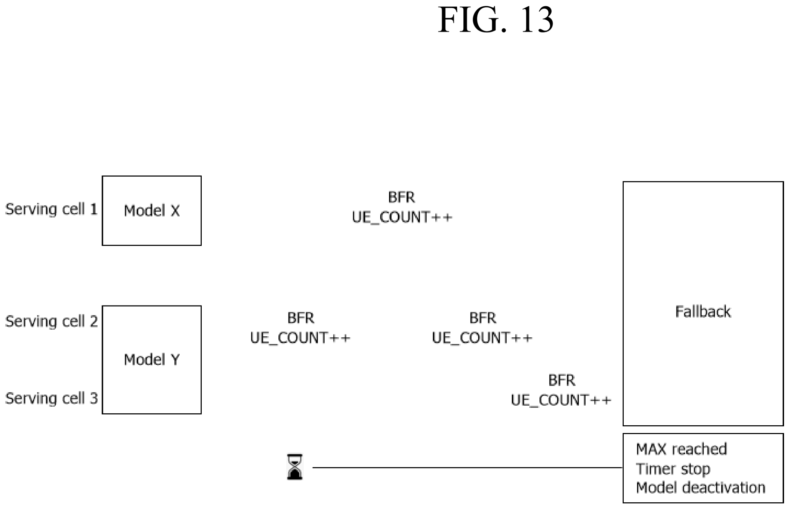

**FIG. 13 is a diagram illustrating model deactivation performed based on a terminal according to an embodiment of the disclosure.**

Referring to FIG. 13, a single timer and BFR count parameter are defined for the terminal, and regardless of which serving cell the BFR occurs on, the BFR count is tracked using one timer (UE_timer) and one parameter (UE_COUNT). In the example shown in FIG. 13, if the BFR count reaches the maximum value while the timer is running, all AI/ML models for beam management activated for the terminal may be deactivated.

The descriptions provided earlier in this specification can be applied to beam management for AI/ML models that are applied per serving cell. Since BFR is currently defined to operate on a per-serving cell basis, it is preferable that the event determining model deactivation due to BFR operates on a serving cell basis, as illustrated in the examples shown in FIGS. 12A through 12C.

Meanwhile, if the previously described contents in this specification are used for the purpose of determining the reliability of a model, it is preferable to perform the deactivation operation of the corresponding model (or AI/ML model-based beam management) applied to the terminal based on the number of consecutive BFR occurrences in a specific cell (for example, n times or more, where n is an integer greater than or equal to 1). In other words, as illustrated in the examples of FIGS. 12B and 12C, it is preferable to deactivate the 'AI/ML model-based beam management' for all serving cell(s) where the corresponding AI/ML model has been applied for beam management, and perform a fallback to the legacy beam management procedure.

If the maximum number of BFRs described above in this specification is greater than 2, it is preferable that the timer length is set to a sufficiently long duration that takes into account both the time from when the BFR is triggered until the BFR success/failure is determined, and the time until a new BFR is declared (i.e., consecutive BFI receptions).

The model deactivation-related operations described above in this specification are preferably performed at the MAC layer.

Additionally, the matters described in this specification are applicable to both UE-side models and NW-side models.

### <Embodiments of the present disclosure>

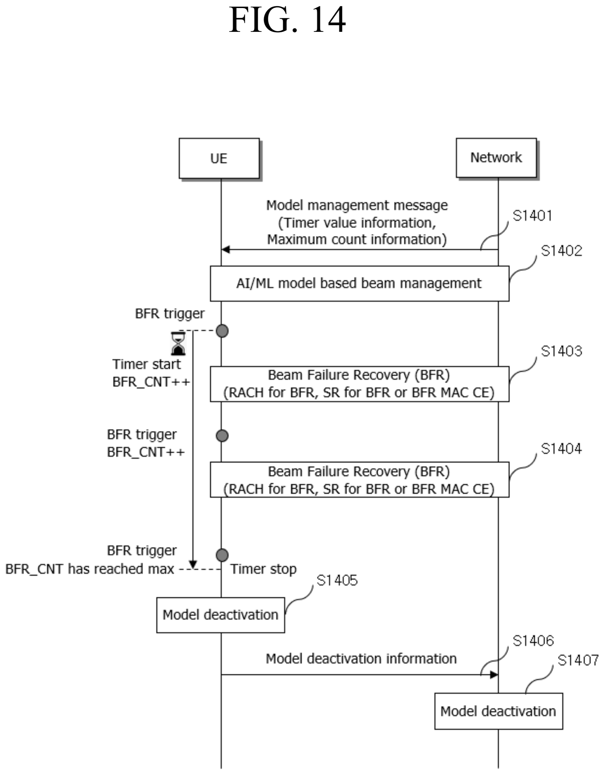

**FIG. 14 is a diagram illustrating operations of a base station and a terminal according to an embodiment of the disclosure.**

Referring to FIG. 14, the base station transmits a message including configuration information related to the AI/ML model for beam management to the terminal, and the terminal receives the message (S1401). The message including the configuration information related to the AI/ML model may be an RRC message for AI/ML model management or an RRC message for AI/ML model-based beam management. The configuration information related to the AI/ML model may include at least one of the following: i) AI/ML model information for the beam management procedure, ii) timer value information related to the AI/ML model (model deactivation timer: model_DeactivationTimer), and iii) maximum BFR count information related to the timer (model BFR maximum count: model_bfrMax).

The terminal performs AI/ML model-based beam management (S1402). The AI/ML model-based beam management may be performed based on the AI/ML model-related configuration information which is previously transmitted by the base station. Specifically, the AI/ML model-based beam management may be performed based on the model deactivation timer (model_DeactivationTimer) and the model BFR maximum count (model_bfrMax) information applied per serving cell. Additionally, the terminal may perform AI/ML model-based beam management by using the UE variable BFR counter (BFR_COUNTER / BFR_CNT) utilized in the BFR procedure applied per serving cell.

When the terminal triggers a BFR for a serving cell where an AI/ML model is applied, if there is no running timer (model_DeactivationTimer), the terminal starts the timer (model_DeactivationTimer). While the timer (model_DeactivationTimer) is running, the terminal performs the BFR based on the triggered BFR (S1403 to S1404). Here, the BFR may include the RACH procedure, SR transmission, and/or MAC CE transmission.

The terminal increments the BFR counter (BFR_CNT) by 1 based on the BFR triggering. If the BFR counter (BFR_CNT) reaches the model BFR maximum count (model_bfrMax), i.e., if the BFR counter (BFR_CNT) is equal to or greater than the model BFR maximum count (model_bfrMax), the terminal stops the timer (model_DeactivationTimer). Then, the terminal deactivates the corresponding AI/ML model (S1405) and provides a notification to the RRC layer of the terminal..

When the timer (model_DeactivationTimer) expires, the counter (BFR_CNT) is set to 0.

Meanwhile, when the network manages the model or in the case of a network-side model (NW-side model), the terminal notifies the base station of the deactivation of the AI/ML model. That is, the terminal transmits the AI/ML model deactivation information to the base station, and the base station receives the AI/ML model deactivation information (S1406). The AI/ML model deactivation information may include at least one of the following: i) identity information of the deactivated AI/ML model, ii) an indicator instructing the deactivation, and iii) an indicator notifying that the model has been deactivated. Here, ii) the indicator instructing the deactivation may be included in the case of a network-side model (NW-side model), and iii) the indicator notifying that the model has been deactivated may be included when the network performs model management.

When the base station receives AI/ML model deactivation information from the terminal, it may stop beam generation related to the AI/ML model applied for the terminal's beam management and fallback to the typical beam management method (e.g., legacy beam management method). If it is a network-side model (NW-side model), the network (e.g., the base station) deactivates the AI/ML model operating within the network (S1407). If the network (e.g., the base station) performs model management, the network manages the corresponding AI/ML model related to the terminal accordingly.

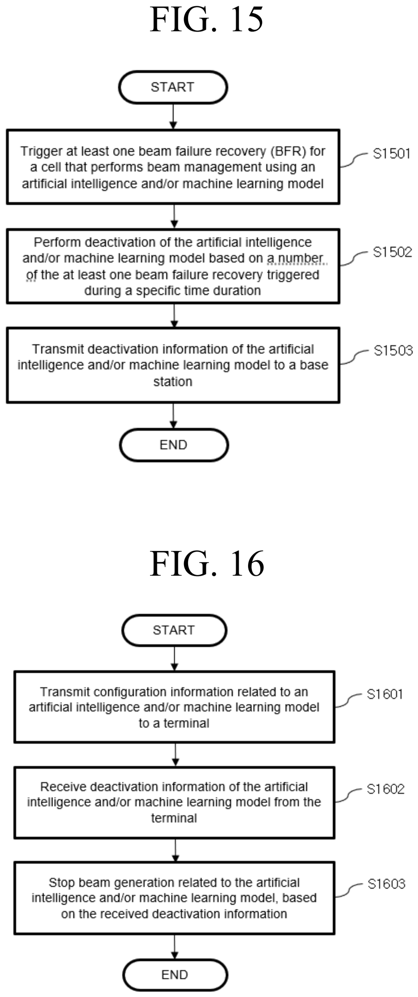

**FIG. 15 is a flowchart showing a method of operating a terminal according to an embodiment of the disclosure.**

Referring to FIG. 15, the terminal triggers at least one beam failure recovery (BFR) for a cell that performs beam management using an artificial intelligence and/or machine learning (AI/ML) model (S1501). Then, based on the number of the at least one BFR triggered during a specific time duration, the terminal initiates deactivation of the AI/ML model (S1502). Afterward, the terminal transmits the AI/ML model deactivation information to the base station (S1503).

The terminal may start a timer associated with the deactivation of the artificial intelligence and/or machine learning model and count the number of the at least one beam failure recovery triggered while the timer is running.

Further, the terminal may stop the timer when the counted number of the at least one beam failure recovery reaches a maximum count and reset the counted number of the at least one beam failure recovery when the timer expires.

Meanwhile, the terminal may receive configuration information related to the artificial intelligence and/or machine learning model. The configuration information related to the artificial intelligence and/or machine learning model may include at least one of i) timer value information and ii) maximum count information for beam failure recovery.

In addition, the deactivation information transmitted by the terminal to the base station may include at least one of i) identity information of the artificial intelligence and/or machine learning model, ii) information indicating that the artificial intelligence and/or machine learning model has been deactivated and iii) an indicator indicating deactivation of an artificial intelligence and/or machine learning model of the base station.

**FIG. 16 is a flowchart showing a method of operating a base station according to an embodiment of the disclosure.**

Referring to FIG. 16, the base station transmits configuration information related to an artificial intelligence and/or machine learning (AI/ML) model to the terminal (S1601). Then, the base station receives AI/ML model deactivation information from the terminal (S1602). Afterward, based on the received deactivation information, the base station stops beam generation related to the AI/ML model (S1603).

Meanwhile, the base station may transmit configuration information related to the artificial intelligence and/or machine learning model to the terminal. The configuration information related to the artificial intelligence and/or machine learning model may include at least one of timer value information and maximum count information for beam failure recovery.

In addition, the deactivation information transmitted by the terminal to the base station may include at least one of i) identity information of the artificial intelligence and/or machine learning model, ii) information indicating that the artificial intelligence and/or machine learning model has been deactivated and iii) an indicator indicating deactivation of an artificial intelligence and/or machine learning model of the base station.

Meanwhile, the base station may fall back to beam management that does not apply the artificial intelligence and/or machine learning model based on the received deactivation information from the terminal.

The embodiments disclosed in this disclosure may be applied independently or operated in any combination. Although this disclosure is described based on a 5G NR system, it is also within the scope of this disclosure to apply the concepts disclosed herein to any type of system, regardless of the specific wireless communication technology.

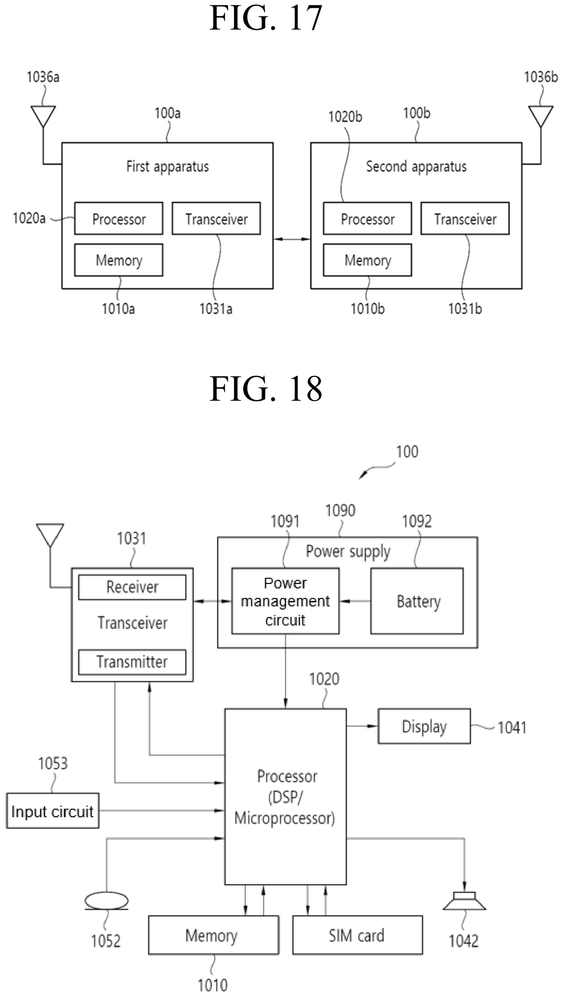

**FIG. 17 shows apparatuses according to an embodiment of the disclosure.**

Referring to FIG. 17, a wireless communication system may include a first apparatus 100a and a second apparatus 100b.

The first apparatus 100a may include a base station, a network node, a transmission user equipment (UE), a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 18 is a block diagram showing a configuration of a terminal according to an embodiment of the disclosure.**

In particular, FIG. 18 illustrates the foregoing apparatus of FIG. 17 in more detail.

The apparatus includes a memory 1010, a processor 1020, a transceiver 1031, a power management circuit 1091, a battery 1092, a display 1041, an input circuit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management circuit 1091 manages a power for the processor 1020 and/or the transceiver 1031. The battery 1092 supplies power to the power management module 1091. The display 1041 outputs the result processed by the processor 1020. The input circuit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

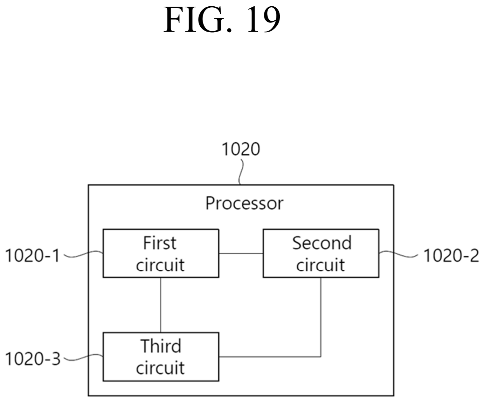

**FIG. 19 is a configuration block diagram of a processor in which the disclosure is implemented.**

Referring to FIG. 19, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP). The processor 1020 may include at least one of a digital signal processor (DSP), a central processing unit (CPU), and a graphics processing unit (GPU).

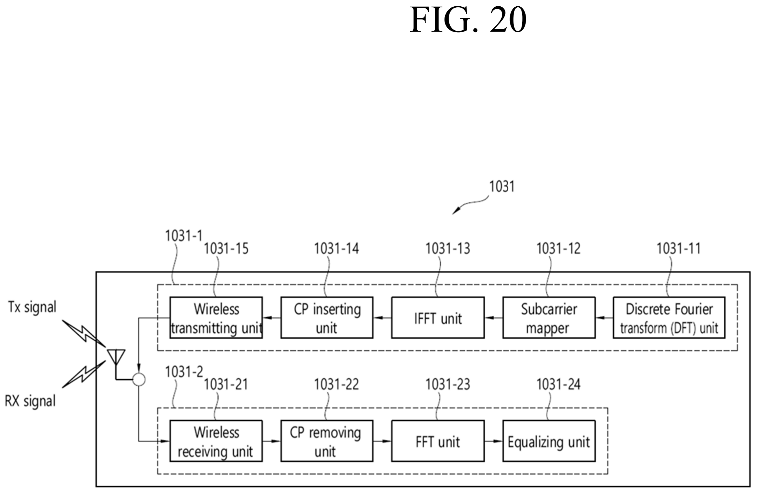

**FIG. 20 is a detailed block diagram of a transceiver of a first apparatus shown in FIG. 17 or a transceiving unit of an apparatus shown in FIG. 18.**

Referring to FIG. 20, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

**Claims**

1. A method for performing beam management by a terminal in a wireless communication system, the method comprising:

   triggering at least one beam failure recovery (BFR) for a cell that performs beam management using an artificial intelligence and/or machine learning model;
   performing deactivation of the artificial intelligence and/or machine learning model based on a number of the at least one BFR triggered during a specific time duration; and
   transmitting deactivation information of the artificial intelligence and/or machine learning model to a base station.

2. The method of claim 1, further comprising:

   starting a timer associated with the deactivation of the artificial intelligence and/or machine learning model; and
   counting the number of the at least one beam failure recovery triggered while the timer is running.

3. The method of claim 2, further comprising:
   stopping the timer when the counted number of the at least one beam failure recovery reaches a maximum count.

4. The method of claim 2, further comprising:
resetting the counted number of the at least one beam failure recovery when the timer expires.

5. The method of claim 1, further comprising:
receiving configuration information related to the artificial intelligence and/or machine learning model.

6. The method of claim 5, wherein the configuration information related to the artificial intelligence and/or machine learning model includes at least one of timer value information and maximum count information for beam failure recovery.

7. The method of claim 1, wherein the deactivation information includes at least one of i) identity information of the artificial intelligence and/or machine learning model, ii) information indicating that the artificial intelligence and/or machine learning model has been deactivated and iii) an indicator indicating deactivation of an artificial intelligence and/or machine learning model of the base station.

8. A method for performing beam management by a base station in a wireless communication system, the method comprising:

transmitting configuration information related to an artificial intelligence and/or machine learning model to a terminal;
receiving deactivation information of the artificial intelligence and/or machine learning model from the terminal; and
stopping beam generation related to the artificial intelligence and/or machine learning model based on the received deactivation information.

9. The method of claim 8, wherein the configuration information related to the artificial intelligence and/or machine learning model includes at least one of timer value information and maximum count information for beam failure recovery.

10. The method of claim 8, wherein the deactivation information includes at least one of i) identity information of the artificial intelligence and/or machine learning model, ii) information indicating that the artificial intelligence and/or machine learning model has been deactivated and iii) an indicator indicating deactivation of an artificial intelligence and/or machine learning model of the base station.

11. The method of claim 8, further comprising:
performing a fallback to beam management that does not apply the artificial intelligence and/or machine learning model based on the received deactivation information.

12. A communication apparatus in a wireless communication system, comprising:

at least one processor; and
at least one memory configured to store instructions and operably electrically connectable to the at least one processor,
wherein operations performed based on the instructions executed by the at least one processor comprise:

triggering at least one beam failure recovery (BFR) for a cell that performs beam management using an artificial intelligence and/or machine learning model;
performing deactivation of the artificial intelligence and/or machine learning model based on a number of the at least one BFR triggered during a specific time duration; and
transmitting deactivation information of the artificial intelligence and/or machine learning model to a base station.

13. The communication apparatus of claim 12, wherein operations performed based on the instructions executed by the at least one processor further comprise:

starting a timer associated with the deactivation of the artificial intelligence and/or machine learning model; and
counting the number of the at least one beam failure recovery triggered while the timer is running.

EP 4 645 709 A1

**14.** The communication apparatus of claim 13, wherein operations performed based on the instructions executed by the at least one processor further comprise:
stopping the timer when the counted number of the at least one beam failure recovery reaches a maximum count.

**15.** The communication apparatus of claim 13, wherein operations performed based on the instructions executed by the at least one processor further comprise:
resetting the counted number of the at least one beam failure recovery when the timer expires.

**16.** The communication apparatus of claim 12, wherein operations performed based on the instructions executed by the at least one processor further comprise:
receiving configuration information related to the artificial intelligence and/or machine learning model.

**17.** The communication apparatus of claim 16, wherein the configuration information related to the artificial intelligence and/or machine learning model includes at least one of timer value information and maximum count information for beam failure recovery.

**18.** The communication apparatus of claim 12, wherein the deactivation information includes at least one of i) identity information of the artificial intelligence and/or machine learning model, ii) information indicating that the artificial intelligence and/or machine learning model has been deactivated and iii) an indicator indicating deactivation of an artificial intelligence and/or machine learning model of the base station.

20

# FIG. 1

# FIG. 2

# FIG. 3A

# FIG. 3B

# FIG. 3C

# FIG. 4

Resource grid

A carrier
(up to 3300 subcarriers, i. e., 275 RBs)

A BWP

1 RB = 12 subcarriers

1 RE

1 subcarrier

1 symbol

k = 0

l = 0 · · · · ·

# FIG. 5

DL OR UL

FREQUENCY

RB INDEX

5
4
3
2
1
0

0  1  2  3  4  5  6  7  8  9  10  11  12  13

SYMBOL INDEX

One TTI

: DL CONTROL CHANNEL          : UL CONTROL CHANNEL

# FIG. 6

# FIG. 7

# FIG. 8A

# FIG. 8B

# FIG. 9

EP 4 645 709 A1

T-3   T-2   T-1   T   T+1   T+2   T+N

Set B information at past time points is used as model input

input

AI model

output   Predicts Set A for the next N time instances

# FIG. 10

```
         ┌──────────────┐
         │    START     │
         └──────┬───────┘
                │
                ▼
   ┌─────────────────────────────────────┐
   │ Trigger beam failure recovery (BFR)  │        S1001
   │ for a cell that performs beam        │
   │ management using an artificial       │
   │ intelligence and/or machine learning │
   │ model                                │
   └──────────────┬──────────────────────┘
                  │
                  ▼
   ┌─────────────────────────────────────┐
   │ Indicate the deactivation of the     │        S1002
   │ artificial intelligence and/or       │
   │ machine learning model based on a    │
   │ number of BFR triggerings during a   │
   │ specific time duration               │
   └──────────────┬──────────────────────┘
                  │
                  ▼
         ┌──────────────┐
         │     END      │
         └──────────────┘
```

# FIG. 11A

EP 4 645 709 A1

# FIG. 11B

EP 4 645 709 A1

# FIG. 12A

Serving cell 1 — Model X

BFR  
C1_COUNT++

BFR  
C1_COUNT++

Timer expiry  
C1_COUNT reset

Serving cell 2 — Model Y

BFR  
C2_COUNT++

BFR  
C2_COUNT++

BFR  
C2_COUNT++

MAX reached  
Timer stop  
Model deactivation

Fallback

Serving cell 3

BFR  
C3_COUNT++

Timer expiry  
C3_COUNT reset

EP 4 645 709 A1

# FIG. 12B

Serving cell 1 | Model X

BFR
C1_COUNT++

BFR
C1_COUNT++

Timer expiry
C1_COUNT reset

Serving cell 2 | Model Y

BFR
C2_COUNT++

BFR
C2_COUNT++

BFR
C2_COUNT++

MAX reached
Timer stop
Model deactivation

Serving cell 3

BFR
C3_COUNT++

Timer stop
Model deactivation

Fallback

# FIG. 12C

Serving cell 1 — Model X

BFR
C1_COUNT++
— BFR C1_COUNT++ → Timer stop / Model deactivation

Serving cell 2

BFR
C2_COUNT++
— BFR C2_COUNT++ — MAX reached / BFR C2_COUNT++ → Timer stop / Model deactivation

Model Y

Serving cell 3

BFR
C3_COUNT++
→ Timer stop / Model deactivation

Fallback

# FIG. 13

Serving cell 1 | Model X

BFR
UE_COUNT++

Serving cell 2

Model Y

Serving cell 3

BFR
UE_COUNT++

BFR
UE_COUNT++

BFR
UE_COUNT++

Fallback

MAX reached
Timer stop
Model deactivation

# FIG. 14

UE

Network

Model management message
(Timer value information,
Maximum count information)
S1401

S1402

AI/ML model based beam management

BFR trigger

Timer start
BFR_CNT++

S1403

Beam Failure Recovery (BFR)
(RACH for BFR, SR for BFR or BFR MAC CE)

BFR trigger
BFR_CNT++

S1404

Beam Failure Recovery (BFR)
(RACH for BFR, SR for BFR or BFR MAC CE)

BFR trigger
BFR_CNT has reached max      Timer stop

S1405

Model deactivation

S1406
S1407

Model deactivation information

Model deactivation

# FIG. 15

```
┌─────────┐
│  START  │
└────┬────┘
     │
     ▼
┌──────────────────────────────────────────┐
│ Trigger at least one beam failure recovery│ ── S1501
│ (BFR) for a cell that performs beam       │
│ management using an artificial            │
│ intelligence and/or machine learning model│
└────────────────┬─────────────────────────┘
                 │
                 ▼
┌──────────────────────────────────────────┐
│ Perform deactivation of the artificial    │ ── S1502
│ intelligence and/or machine learning model│
│ based on a number of the at least one beam│
│ failure recovery triggered during a       │
│ specific time duration                    │
└────────────────┬─────────────────────────┘
                 │
                 ▼
┌──────────────────────────────────────────┐
│ Transmit deactivation information of the  │ ── S1503
│ artificial intelligence and/or machine    │
│ learning model to a base station          │
└────────────────┬─────────────────────────┘
                 │
                 ▼
            ┌─────────┐
            │   END   │
            └─────────┘
```

# FIG. 16

```
┌─────────┐
│  START  │
└────┬────┘
     │
     ▼
┌──────────────────────────────────────────┐
│ Transmit configuration information related│ ── S1601
│ to an artificial intelligence and/or      │
│ machine learning model to a terminal      │
└────────────────┬─────────────────────────┘
                 │
                 ▼
┌──────────────────────────────────────────┐
│ Receive deactivation information of the   │ ── S1602
│ artificial intelligence and/or machine    │
│ learning model from the terminal          │
└────────────────┬─────────────────────────┘
                 │
                 ▼
┌──────────────────────────────────────────┐
│ Stop beam generation related to the       │ ── S1603
│ artificial intelligence and/or machine    │
│ learning model, based on the received     │
│ deactivation information                  │
└────────────────┬─────────────────────────┘
                 │
                 ▼
            ┌─────────┐
            │   END   │
            └─────────┘
```

# FIG. 17

1036a

100a

First apparatus

1020a — Processor    Transceiver

Memory

1010a    1031a

1020b    100b

Second apparatus

Processor    Transceiver

Memory

1010b    1031b

1036b

# FIG. 18

100

1091    1090    1092

Power supply

1031

Receiver

Transceiver

Transmitter

Power management circuit

Battery

1020

Processor (DSP/ Microprocessor)

Display — 1041

1053

Input circuit

1052    Memory    SIM card    1042

1010

# FIG. 19

# FIG. 20

1031

1031-1 / 1031-15 · 1031-14 · 1031-13 · 1031-12 · 1031-11

Tx signal

| Wireless transmitting unit | CP inserting unit | IFFT unit | Subcarrier mapper | Discrete Fourier transform (DFT) unit |

RX signal

1031-2 / 1031-21 · 1031-22 · 1031-23 · 1031-24

| Wireless receiving unit | CP removing unit | FFT unit | Equalizing unit |

EP 4 645 709 A1

38

**EP 4 645 709 A1**

# INTERNATIONAL SEARCH REPORT

| | International application No. |
|---|---|
| | **PCT/KR2024/000945** |

## A. CLASSIFICATION OF SUBJECT MATTER

**H04B 7/06**(2006.01)i; **H04B 7/0408**(2017.01)i; **H04W 24/08**(2009.01)i; **G06N 20/00**(2019.01)i

According to International Patent Classification (IPC) or to both national classification and IPC

## B. FIELDS SEARCHED

Minimum documentation searched (classification system followed by classification symbols)

H04B 7/06(2006.01); H04W 24/10(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인공지능(artificial intelligence), 머신러닝(machine learning), 모델(model), 빔실패 복구(beam failure recovery), 비활성화(deactivation)

## C. DOCUMENTS CONSIDERED TO BE RELEVANT

| Category* | Citation of document, with indication, where appropriate, of the relevant passages | Relevant to claim No. |
|---|---|---|
| Y | SONY. Consideration on AI/ML for beam management. R1-2211608, 3GPP TSG RAN WG1 #111. Toulouse, France. 07 November 2022. See section 2.1. | 1-7,12-18 |
| Y | ZTE CORPORATION. Discussion on other aspects for AI beam management. R1-2211060, 3GPP TSG RAN WG1 #111. Toulouse, France. 07 November 2022. See sections 1 and 3.2-3.3. | 1-18 |
| Y | SAMSUNG. Representative sub use cases for Positioning. R1-2209727, 3GPP TSG RAN WG1 #110bis-e, e-Meeting. 30 September 2022. See section 4. | 2-4,13-15 |
| Y | INTEL CORPORATION. General aspects of AI/ML air interface and RAN2 impact. R2-2211455, 3GPP TSG RAN WG2 Meeting #120. Toulouse, FR. 04 November 2022. See section 2.3.5. | 5-6,8-11,16-17 |
| A | WO 2022-182330 A1 (NOKIA TECHNOLOGIES OY et al.) 01 September 2022 (2022-09-01) See paragraphs [0033]-[0072]; and figures 2-5. | 1-18 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 April 2024** | **23 April 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

| International application No. |
| --- |
| **PCT/KR2024/000945** |

| Patent document cited in search report | Publication date (day/month/year) | Patent family member(s) | Publication date (day/month/year) |
| --- | --- | --- | --- |
| WO 2022-182330 A1 | 01 September 2022 | EP 4298818 A1 | 03 January 2024 |

Form PCT/ISA/210 (patent family annex) (July 2022)